# EUROPEAN PATENT APPLICATION

(11) **EP 4 764 428 A1**
(43) Date of publication of application: **24.06.2026**
(21) Application number: 25221806.0
(22) Date of filing: 09.12.2025
(51) Int. Cl.: G01F 23/292, G01F 22/00, G01F 23/284, G01F 23/80

(54) **PREDICTING FILL LEVEL OF A CONTAINER FOR AGRICULTURAL MATERIAL**

(30) Priority: 19.12.2024 US 202463736153 P
(71) Applicant: Precision Planting LLC, Tremont, IL 61568 (US)
(72) Inventor: Zietz, John Michael, Fargo 58102 (US); Vanhoever, Lucas, Fargo 58102 (US); Gelinske, Joshua N., Fargo 58102 (US)
(74) Representative: AGCO Intellectual Property Department

(57) **Abstract**

A mechanism for predicting a fill level of a container. Image data of the interior of the container is received and processed to identify a representation (in the image data) of an interface between agricultural material, gas and the container. The representation of the target interface is processed in a first prediction process to produce an interface-derived fill level of the container. This interface-derived fill level of the container is processed to predict the fill level of the container.

## Description

### CROSS-REFERENCE TO RELATED APPLICATIONS

N/A.

### FIELD

Embodiments of the present disclosure relate to the field of agriculture, and in particular to the prediction of fill levels of agricultural containers.

### BACKGROUND

With ever-increasing population numbers and an ongoing interest in more environmentally friendly farming practices, there is a desire to improve agricultural practices. One important feature of agricultural practices is the storing of agricultural material, i.e., material used for performing agricultural processes or produced by agricultural processes.

Examples of agricultural materials include fluids (such as water, fertilizer, pesticides and so on) as well as solid material that can form heaps or piles (such as grain, fruits, vegetables, crop, salt, livestock feed, compost and so on). Other examples will be readily apparent to the skilled person.

To aid in the performance of agricultural practices, it is useful to have information about a fill level of a container for agricultural material. One known approach is to weigh the agricultural material carried by the container, and derive or predict a fill level based on the measured weight.

There is an ongoing desire to facilitate accurate prediction of a fill level of a container.

### BRIEF SUMMARY

In accordance with a proposed approach, there is provided a monitoring system for predicting a fill level of a container for agricultural material. The monitoring system comprises a sensing arrangement configured to generate image data of an interior of the container, and a processing arrangement.

The processing arrangement is configured to process the image data to identify, if present, the representation of a target interface in the image data, wherein the target interface is an interface between gas, the container and any agricultural material contained in the container. The processing arrangement is further configured to predict a fill level of the container, wherein the processing arrangement is configured to predict the fill level by, if a representation of the target interface is present: performing a first prediction process comprising processing the identified representation of the target interface to predict an interface-derived fill level of the container, and processing the interface-derived fill level of the container to predict the fill level of the container.

The proposed monitoring system provides a mechanism for predicting the fill level of an agricultural material container, which includes identifying a target interface between gas, container, and material. The proposed approach comprises processing image data to identify a target interface representation, being a part of the image data that represents this target interface. The target interface representation is then processed, using a first prediction process, to produce an interface-derived fill level. The overall fill level of the container is determined using the interface-derived fill level.

The proposed approach allows for precise monitoring of agricultural material levels without direct contact or manual inspection. In particular, the proposed approach advantageously recognizes that an interface between two materials provides a stronger or cleaner signal in image data. By using the characteristics of the interface, a more reliable and robust approach for determining a fill level of the container can be achieved.

In some embodiments, the sensing arrangement comprises a depth sensor and the image data comprises depth data of the interior of the container.

In some embodiments, the sensing arrangement comprises a LiDAR sensor and the image data comprises LiDAR data of the interior of the container. The proposed approach is particularly advantageous when the sensing arrangement is a LiDAR sensor, as the material transition between the agricultural material and the container (i.e., at the target interface) causes a stronger signal to be received by the sensing arrangement, e.g., due at least to the inherent change in refractive index at this interface that results in greater reflectivity by the target interface compared to surrounding material. Thus, reliance or dependence upon the target interface for deriving the fill level provides a more robust mechanism for determining the fill level.

In some embodiments, the first prediction process comprises processing the identified representation of the target interface to identify a target interface distance, wherein a target interface distance is a distance between the sensing arrangement and the target interface. In such embodiments, the first prediction process further includes receiving first fill level information indicating, for each of a plurality of potential target interface distances, a first expected fill level of the container, processing the first fill level information and the target interface distance to predict a first predicted fill level of the container, and processing the first predicted fill level of the container to predict the interface-derived fill level of the container.

This multi-step prediction process leverages pre-existing knowledge about the container's geometry to improve fill level estimates. By correlating measured distances with expected fill levels, the system can account for variations in container shape and provide more accurate predictions across different container types.

In some embodiments, the first fill information comprises tabular data identifying, for each of the plurality of potential target interface distances, the first expected fill level of the container. The use of tabular data allows for efficient storage and quick retrieval of fill level information. This approach enables rapid processing and real-time predictions, even when dealing with complex container geometries or multiple container types. The use of tabular data also facilitates low resource determination or prediction of the first expected fill level.

In some embodiments, the first prediction process comprises processing the identified representation of the target interface to identify a target interface shape, wherein a target interface shape is a shape of the target interface. In such embodiments, the first prediction process further includes receiving second fill level information indicating, for each of a plurality of potential target interface shapes, a second expected fill level of the container, processing the second fill level information and the target interface shape to predict a second predicted fill level of the container, and processing the second predicted fill level of the container to predict the interface-derived fill level of the container.

This approach recognizes that the shape of the interface, as seen by the sensing arrangement, is likely to change with different fill levels, particularly if the container has sloped or irregularly shaped size. As such, it is possible to predict a fill level from a shape of the interface.

In some embodiments, the second fill level information comprises a data representation of the interior of the container, wherein the data representation includes a representation of a bottom of the interior of the container. In such embodiments, processing the second fill level information and the target interface shape may comprise identifying a part of the data representation of the interior of the container matching the shape of the target interface shape, and determining the second predicted fill level by determining a difference between the identified part of the data representation and the representation of the bottom of the interior of the container.

This method allows for dynamic fill level calculations based on the actual container geometry. By comparing the current material interface to a known representation of the empty container, the proposed approach is able to accurately determine fill levels even in containers with complex internal structures or irregular shapes.

In some embodiments, the first prediction process comprises processing the identified representation of the target interface to identify a target interface size, wherein a target interface size is a size of the target interface. In such embodiments, the first prediction process further includes receiving third fill level information indicating, for each of a plurality of potential target interface sizes, a third expected fill level of the container, processing the third fill level information and the target interface size to predict a third predicted fill level of the container, and processing the third predicted fill level of the container to predict the interface-derived fill level of the container.

This approach recognizes that the size of the interface, as seen by the sensing arrangement, is likely to change with different fill levels. In particular, due at least to a perspective effect of generating image data, a more distant interface is likely to be smaller compared to a closer interface. In this way, a size of the interface can be correlated to a corresponding fill level.

In some embodiments, the target interface size is a diameter of the target interface. This approach provides a straightforward yet effective method for estimating fill levels in common container shapes used in agricultural applications.

In some embodiments, the processing arrangement is configured to process the image data using an edge detection technique to identify, if present, the representation of the target interface. Edge detection techniques enable precise identification of the boundary between material and empty space. This allows for accurate interface detection even in low-contrast conditions or with materials that may be difficult to distinguish visually.

In some embodiments, the monitoring system further comprises a light source configured to emit light into the interior of the container. In such examples, the processing arrangement may be configured to process the image data to identify, if present, a light reflection representation in the image data, wherein the light reflection representation is a representation in the image data of a reflection of the light emitted by the light source. The predicting a fill level of the container may also comprise, if a light reflection representation of the target interface is present, performing a second prediction process comprising processing the light reflection representation to predict a reflection-derived fill level of the container, and processing the reflection-derived fill level of the container to predict the fill level of the container.

The addition of a controlled light source enhances the capability of the monitoring system to detect the fill level of the container, e.g., provide redundancy and/or improve robustness in predicting the fill level. In particular, it has been recognized that the characteristics of reflected light (e.g., its size, shape and/or distance) will depend or change responsive to the fill level of the container. Thus, it is possible to produce a reflection-derived predicted fill level by processing such characteristics of the reflected light, which can be used to reinforce or back up the interface-derived predicted fill level.

In some embodiments, the second prediction process comprises processing the identified light reflection representation to identify a light reflection distance, wherein a light reflection distance is a distance between the sensing arrangement and the reflection of light emitted by the light source. In such examples, the second prediction process may further comprise receiving fourth fill level information indicating, for each of a plurality of potential light reflection distances, a fourth expected fill level of the container, processing the fourth fill level information and the light reflection distance to predict a fourth predicted fill level of the container, and processing the fourth predicted fill level of the container to predict the reflection-derived fill level of the container.

In some embodiments, the second prediction process comprises processing the light reflection representation to identify a light reflection shape, wherein a light reflection shape is a shape of the reflection of the light emitted by the light source. In such examples, the second prediction process may further comprise receiving fifth fill level information indicating, for each of a plurality of potential light reflection shapes, a fifth expected fill level of the container, processing the fifth fill level information and the light reflection shape to predict a fifth predicted fill level of the container, and processing the fifth predicted fill level of the container to predict the reflection-derived fill level of the container.

In some embodiments, the second prediction process comprises processing the light reflection representation to identify a light reflection size, wherein a light reflection size is a size of the reflection of the light emitted by the light source. In such examples, the second prediction process may further comprise receiving sixth fill level information indicating, for each of a plurality of potential light reflection size, a sixth expected fill level of the container, processing the sixth fill level information and the light reflection size to predict a sixth predicted fill level of the container, and processing the sixth predicted fill level of the container to predict the reflection-derived fill level of the container.

In accordance with another proposed approach, there is provided a storage system comprising the container for agricultural material and the monitoring system as described in any of the previous embodiments.

In accordance with yet another proposed approach, there is provided a computer-implemented method for predicting a fill level of a container for agricultural material. The computer-implemented method comprises generating, using an imaging sensing arrangement, image data of an interior of the container, processing, using a processing arrangement, the image data to identify, if present, a representation of a target interface in the image data, wherein the target interface is an interface between gas, the container and any agricultural material contained in the container. The computer-implemented method also comprises predicting a fill level of the container, wherein, if a representation of the target interface is present, the predicting comprising performing a first prediction process comprising processing the identified representation of the target interface to predict a fill level of the container.

Other technical features may be readily apparent to one skilled in the art from the following figures, descriptions, and claims.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the disclosure will now be described, by way of example only, with reference to the accompanying drawings, in which:
FIG. 1 illustrates a storage system;
FIG. 2 is a flowchart illustrating a proposed method;
FIG. 3 illustrates one example of a first prediction process;
FIG. 4 illustrates another example of the first prediction process;
FIG. 5 illustrates yet another example of the first prediction process;
FIG. 6 is a flowchart illustrating another proposed method;
FIG. 7 illustrates one example of a second prediction process;
FIG. 8 illustrates another example of the second prediction process;
FIG. 9 illustrates yet another example of the second prediction process; and
FIG. 10 is a flowchart illustrating yet another proposed method.

### DETAILED DESCRIPTION

It should be understood that the detailed description and specific examples, while indicating exemplary embodiments of the apparatus, systems and methods, are intended for purposes of illustration only and are not intended to limit the scope of the disclosure. These and other features, aspects, and advantages of the apparatus, systems and methods of the present disclosure will become better understood from the following description, appended claims, and accompanying drawings. It should be understood that the Figures are merely schematic and are not drawn to scale. It should also be understood that the same reference numerals are used throughout the Figures to indicate the same or similar parts.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used.

As used herein, the terms "comprising," "including," "containing," "characterized by," and grammatical equivalents thereof are inclusive or open-ended terms that do not exclude additional, unrecited elements or method acts, but also include the more restrictive terms "consisting of" and "consisting essentially of" and grammatical equivalents thereof.

As used herein, the singular forms following "a," "an," and "the" are intended to include the plural forms as well, unless the context clearly indicates otherwise.

As used herein, the term "may" with respect to a material, structure, feature, or method act indicates that such is contemplated for use in implementation of an embodiment of the disclosure, and such term is used in preference to the more restrictive term "is" so as to avoid any implication that other compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, any relational term, such as "first," "second," "top," "bottom," "upper," "lower," "above," "beneath," "side," "outer," "inner," etc., is used for clarity and convenience in understanding the disclosure and accompanying drawings, and does not connote or depend on any specific preference or order, except where the context clearly indicates otherwise. For example, these terms may refer to an orientation of elements as illustrated in the drawings. Additionally, these terms may refer to an orientation of elements of the disclosure when utilized in a conventional manner.

As used herein, the term "substantially" in reference to a given parameter, property, or condition means and includes to a degree that one skilled in the art would understand that the given parameter, property, or condition is met with a small degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter, as well as variations resulting from manufacturing tolerances, etc.).

As used herein, the term "and/or" includes any and all combinations of one or more of the associated listed items.

Ordinal numbers (e.g. "first", "second" and so on) have been used purely to distinguish different elements from one another for the sake of clarity, and does not necessarily imply a specific order, importance, relationship, or presence of all numbered elements. Reference to a non-"first" (e.g. "second" or "third") element does not necessitate that a "first" element be present. The skilled person would be capable of relabeling any such elements as appropriate (e.g. relabeling a "second" element as a "first" element if only the second element is present).

This disclosure relates to a mechanism for predicting a fill level of a container. Image data of the interior of the container is received and processed to identify a representation (in the image data) of an interface between agricultural material, gas and the container. The representation of the target interface is processed in a first prediction process to produce an interface-derived fill level of the container. This interface-derived fill level of the container is processed to predict the fill level of the container.

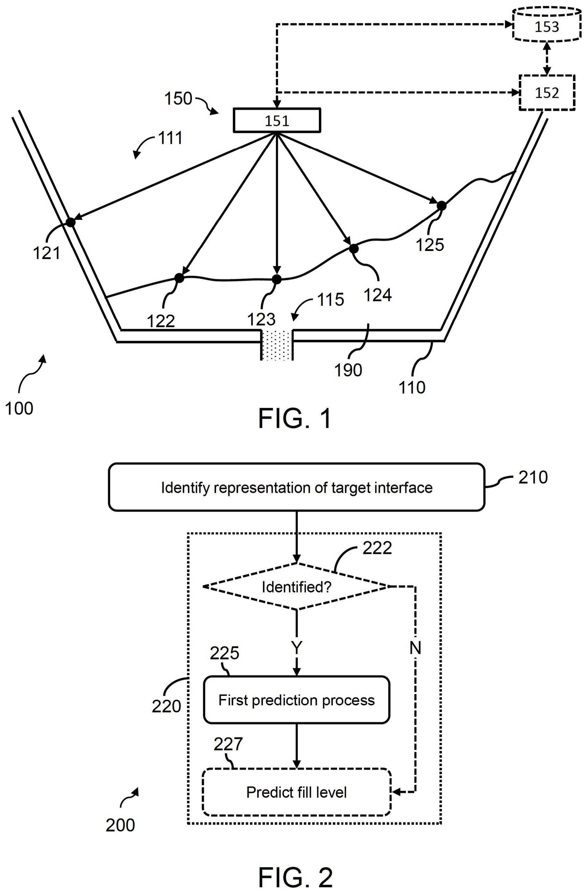

FIG. 1 illustrates a storage system 100 in which embodiments may be employed, for improved contextual understanding.

The storage system 100 comprises a container 110 and a herein proposed monitoring system 150.

The container 110 has an interior 111 (i.e., an interior volume) for carrying agricultural material 190, such as pourable agricultural material. The skilled person will readily appreciate how the container may comprise one or more walls and/or a base for defining the interior 111 or interior volume.

The container 110 may, for instance, be mounted on or to an agricultural vehicle or trailer. For instance, the container 110 may be a container, such as a grain bin, carried by a combine harvester for storing harvested crop. As another example, the container may be a container carried on a trailer towed by a tractor for storing crop. As yet another example, the container 110 may be a container carrying fertilizer for distribution by an agricultural material (such as a sprayer or spreader). Other examples will be readily apparent to the skilled person.

The container 110 may, for instance, comprise an outlet 115 through which the agricultural material may be emptied from the container. This outlet may, however, be omitted in other examples.

The monitoring system 150 comprises a sensing arrangement 151 and a processing arrangement 152.

The sensing arrangement 151 is configured to generate image data 161 of the interior 111 of the container 110. The image data 161 comprises a digital representation of the interior of the container, and therefore of any agricultural material 190 contained in the container (if present).

The sensing arrangement is appropriately within or near the container to capture image data of the interior of the container and the agricultural material within it.

In some examples, such as that illustrated, the sensing arrangement may be positioned above the agricultural material, such as mounted on or near the top of the container. This overhead positioning allows for a comprehensive view of the container's contents, enabling the sensing arrangement to capture image data of the entire surface of the agricultural material

In other examples, the sensing arrangement may be positioned within the agricultural material, for example, at or near the base of the container.

The image data 161 may, for instance, comprise texture image data (also known as texture data) and/or depth image data (also known as depth data).

Texture image data carries information about the appearance of the interior of the container. In particular, the texture image data may be responsive to the intensity of one or more reflections of light from the container and/or any contained agricultural material. This light may, for instance, comprise any suitable form of electromagnetic radiation, e.g., visible light or infrared light.

Depth image data carries information representing a distance between a reference point of the sensing arrangement and a plurality of different measurement points 121, 122, 123, 124, 125 on/in the interior 111 of the container 110. The illustrated measurement points are merely exemplary, and the skilled person will appreciate that (in practice) there may be many more measurement points. In particular, the depth image data may be processable to produce a digital model of at least the exposed surface of the container and any agricultural material contained therein.

The sensing arrangement 151 may be appropriately configured to generate the image data, i.e., comprise one or more suitably adapted sensing elements.

For instance, where the image data 161 comprises texture image data, the sensing arrangement may comprise one or more image sensors configured to capture light reflected from the interior of the container.

The image sensor(s) may include charge-coupled devices (CCDs), complementary metal-oxide-semiconductor (CMOS) sensors, or other suitable light-sensitive electronic devices. The image sensor(s) may be configured to capture visible light, infrared light, or a combination thereof to generate texture image data representing the appearance of the interior 111 and any agricultural material contained therein.

In some examples, the sensing arrangement 151 may comprise a light source for illuminating the interior 111 of the container 110. The light source may be configured to emit light into the interior of the container to enhance visibility and improve the quality of the image data captured by the image sensor(s). The light source may emit visible light, infrared light, or a combination thereof, depending on the specific requirements of the system.

In some examples, where the image data comprises depth image data, the sensing arrangement may comprise one or more depth sensors configured to measure distances to different measurement points within the interior of the container.

The depth sensor(s) may include one or more time-of-flight sensors, which measure the time it takes for emitted light or sound waves to travel to an object and reflect back to the sensor. Suitable examples are well known in the art, such as laser-based time-of-flight systems or ultrasonic-based time-of-flight systems. In preferred examples, if used, the time of flight sensor is an indirect time of flight sensor, such as a phase-based time of flight sensor.

In some examples, the depth sensor(s) may make use of LiDAR (Light Detection and Ranging) technology, which uses pulsed laser light to measure distances to generate depth image data. Thus, the depth sensor(s) may comprise a LiDAR system configured to generate LiDAR-based depth image data.

In some examples, the depth sensor(s) may comprise a 4D scanner, such as a structured light 4D scanner that projects a known pattern of light onto the combined exposed surface and uses one or more cameras to capture and analyze how the pattern is distorted, enabling the 4D scanner to produce depth data representing the distance(s) to a plurality of different measurement points.

The processing arrangement 152 is configured to predict a fill level of the container using a herein proposed approach, which processes the image data produced by the sensing arrangement.

In the context of the present disclosure, a fill level refers to a measure or indication of the amount of agricultural material present in the container relative to the container's capacity. The fill level may be expressed as a percentage of the container's total volume, a specific volume measurement, a height or depth of material within the container, or any other suitable quantitative or qualitative representation of the container's contents.

The processing arrangement 152 may comprise at least one processor and at least one memory carrying instructions that, when executed, cause the at least one processor to perform at least some of the desired functionality of the processing arrangement.

Each processor may be embodied as, for instance, one or more pieces of general-purpose and/or fixed function circuitry, such as a general-purpose microprocessor (e.g., a CPU), a field-programmable gate array (FPGA), an appropriately configured application-specific integrated circuit (ASIC), and/or a distributed processing arrangement (e.g., comprising multiple interconnected processing units working in parallel).

The memory may comprise any suitable non-volatile memory, such as a read-only memory (ROM), erasable programmable read-only memory (EPROM), electrically erasable programmable read-only memory (EEPROM), flash memory, or any combination thereof. The memory may also or otherwise comprise volatile memory, such as random access memory (RAM), static random access memory (SRAM), dynamic random access memory (DRAM), or any combination thereof.

It will be appreciated that the processing arrangement 152 may be communicatively coupled to the sensing arrangement 151 to receive or retrieve the image data therefrom. Alternatively, the sensing arrangement may be configured to store the image data in a memory 153, from which the processing arrangement 152 retrieves the image data.

In some examples, the processing arrangement may be positioned in a different location from the sensing arrangement. For example, the processing arrangement may be a remote processing arrangement located away from the container and sensing arrangement. The processing arrangement may communicate with the sensing arrangement 152 (or memory 153) wirelessly or via a wired connection to receive the image data. This remote configuration may allow for centralized processing of data from multiple containers or sensing arrangements. Additionally, locating the processing arrangement remotely may provide improved flexibility in terms of allocation of computational resource and ease of maintenance or upgrades.

In some examples, the processing arrangement 152 may be integrated with the sensing arrangement 151 in a single unit mounted on or near the container. This integrated configuration may allow for real-time processing of image data and immediate prediction of fill levels. This integrated unit therefore may include both the sensing arrangement and the processing arrangement, which may reduce latency in data transmission and analysis. This arrangement may be particularly useful in scenarios where rapid, on-site decision-making is required based on the container's fill level.

FIG. 2 is a flowchart illustrating a method 200 performed by the processing arrangement 152 (FIG. 1) for processing the image data to predict a fill level of the container. Continued reference will be made to the elements illustrated by FIG. 1 for contextual understanding.

The method 200 comprises an act 210 of processing the image data to identify, if present, the representation of a target interface in the image data. The target interface is an interface between gas (e.g., air), the container and any agricultural material contained in the container. By identifying this interface, the processing arrangement can determine the upper limit of the agricultural material within the container.

In particular, the present disclosure recognizes that the target interface can be more accurately or reliably identified than other components of the interior 111 or agricultural material 190. This is partly due to the recognition that such an interface will define a clear and distinct boundary between the empty space above and the agricultural material below, making it easier to detect and analyze using image processing techniques. Moreover, unlike the agricultural material itself, which may have varying textures, colors, or consistencies, the target interface typically presents a more uniform appearance in image data. By focusing on the target interface, the processing arrangement is able to avoid potential errors or inaccuracies caused by irregularities in the agricultural material's surface or variations in its distribution within the container.

The skilled person will readily appreciate a wide variety of approaches for processing image data to identify a desired representation (here: the representation of a target interface). By way of example, act 210 may comprise processing the image data using one or more image analysis techniques.

One suitable example is an edge detection technique, which is configured to identify the target boundary between the container and the agricultural material in the image data.

Edge detection algorithms are widely used in image processing to identify points in a digital image where the image brightness changes sharply or has discontinuities. In the context of identifying the target interface, these algorithms can be particularly effective as they can highlight the boundary between the empty space (gas) and the agricultural material within the container.

Suitable examples of edge detection techniques include those mentioned in Ziou, Djemel, and Salvatore Tabbone. "Edge detection techniques-an overview." 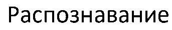 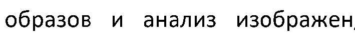 /Pattern Recognition and Image Analysis: Advances in Mathematical Theory and Applications 8.4 (1998): 537-559 or Maini, Raman, and Himanshu Aggarwal. "Study and comparison of various image edge detection techniques." International journal of image processing (IJIP) 4.1 (2009): 1-11. Other examples are known to the skilled person.

Another suitable example is an image segmentation algorithm configured or trained to identify a segmentation result identifying the bounds of the representation of the agricultural material within the image data, these bounds defining the target boundary. Example image segmentation algorithms are well established in the art, and can be readily adapted for use in performing act 210. Examples include machine-learning segmentation methods, active contour models, region growing methods and so on. A wide variety of suitable examples are provided by Yu, Ying, et al. "Techniques and challenges of image segmentation: A review." Electronics 12.5 (2023): 1199.

The method 200 also comprises an act 220 of predicting a fill level of the container.

In particular, act 220 comprises, if a representation of the target interface is present, performing a first prediction process 225 to predict an interface-derived fill level and processing 227 the interface-derived fill level to predict the fill level of the container.

The first prediction process 225 comprises processing the identified representation of the target interface to predict the interface-derived fill level of the container.

It is noted that, in some examples, if no representation of the target interface is present, then act 227 may predict that the container is empty, i.e., the fill level is 0 or 0%. Alternatively, if no representation of the target interface is present, then the act 227 may predict that the fill level is indeterminable.

Thus, the act 220 may comprise an act 222 of determining whether or not a representation of the target interface is present. Although illustrated as a separate act in FIG. 2, the skilled person will appreciate that (in practice) act 222 may be performed as part of act 210. Responsive to a positive determination in act 222 (i.e., a target representation is identified), the method may perform the first prediction process. Responsive to a negative determination in act 212, the method may move to act 227.

The first prediction process 225 (used in act 220) recognizes that the fill level of the container 110 (by agricultural material) influences one or more characteristics of the representation of the target interface. In particular, it will be appreciated that at least the size and/or shape of the target interface will change responsive to changes in the fill level of the container. Moreover, the distance to the target interface will also change responsive to changes in the fill level, which can be exploited by the first prediction process when the image data comprises depth (image) data.

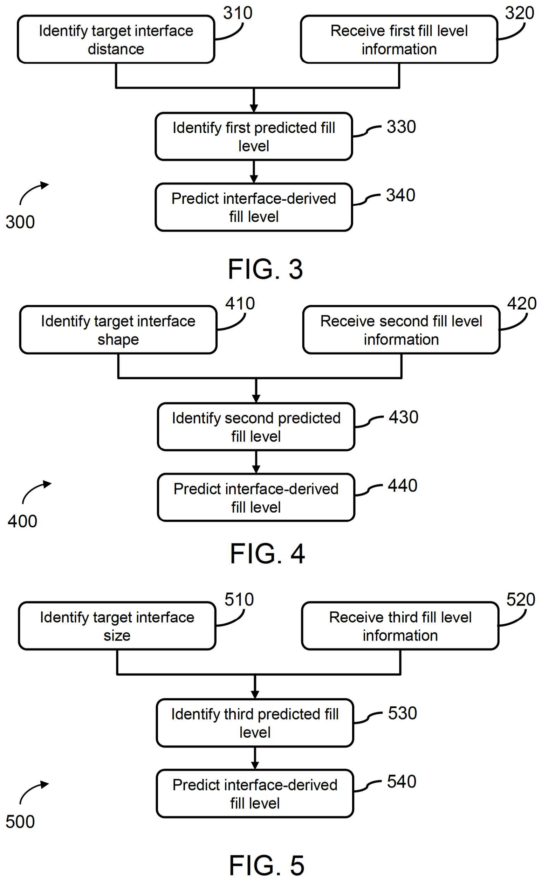

FIG. 3 provides one example first prediction process 300, which may be used as the first prediction process 225 when performing act 220 of method 200 (FIG. 2). This example of the first prediction process makes use of depth information carried by the image data. Thus, for the purposes of this example, the sensing arrangement comprises a depth sensor and the image data comprises depth data of the interior of the container.

The first prediction process comprises processing 310 the identified representation of the target interface to identify a target interface distance. A target interface distance is a distance between the sensing arrangement and the target interface.

As previously explained, the depth data identifies a distance to each of a plurality of points in the interior 111 of the container 110. The representation of the target interface is represented by a set of points or positions in the depth data, each point/position having an associated distance value. The target interface distance may be determined by analyzing these distance values, for example, by calculating an average distance of the points representing the target interface, or by identifying the minimum distance among these points. Other suitable examples for determining the target interface distance using the distance(s) will be readily apparent to the skilled person.

The first prediction process also comprises receiving 320 receiving first fill level information indicating, for each of a plurality of potential target interface distances, a first expected fill level of the container. An alternative label for a potential target interface distance is a candidate target interface distance.

In this way, the first fill level information is effectively able to correlate or map a target interface distance to an expected fill level of the container.

By way of example, the first fill information may comprise a function or model configured to map a target interface distance to the first expected fill level. It will be appreciated that such a function/model will be designed to, if processing a potential target interface distance, produce the expected fill level for the container. The function/model may be linear, polynomial, or exponential, depending upon the relationship between a target interface distance and expected fill level.

As another example, the first fill information comprises tabular data identifying, for each of the plurality of potential target interface distances, the first expected fill level of the container. The first tabular data may therefore comprise a plurality of data entries, each comprising a respective potential target interface distance and its corresponding first expected fill level.

The skilled person would readily appreciate approaches for generating or producing the tabular data.

By way of example, the tabular data may have been created through an empirical measurement approach, in which the container is filled to various levels and the corresponding target interface distances are recorded. As another example, the tabular data may be derived from theoretical calculations based on the known or measured geometry of the container. This approach may utilize mathematical models that consider the container's shape and/or dimensions, and how agricultural material is expected to settle within it.

The first prediction process also comprises processing 330 the first fill level information and the target interface distance to predict a first predicted fill level of the container.

In examples where the first fill level information comprises a function or model, act 330 can be trivially performed by processing the target interface distance using the function/model to produce a first predicted fill level for the target interface distance.

In examples where the first fill level comprises the tabular data, various approaches for performing act 330 are envisaged.

In a first scenario, act 330 may comprise deriving a model from the tabular data of the first fill information, for example by fitting a mathematical model to the data points in the tabular data. This derived model can then be used to process the target interface distance and predict the first predicted fill level. Specifically, once a model is fitted to the tabular data, the target interface distance can be input into the model to calculate a corresponding predicted fill level.

In a second scenario, act 330 may comprise identifying the potential target interface distance nearest to (i.e., having the smallest difference with respect) to the actual target interface distance determined from the image data, and using the corresponding first expected fill level associated with that nearest potential target interface distance as the first predicted fill level. This approach provides a simple and computationally efficient method for predicting the fill level.

In a third scenario, act 330 may comprise, identifying, from amongst the potential target interface distances that are larger than the target interface distance, the nearest target interface distance to the target interface distance and using the corresponding first expected fill level as the first predicted fill level. This approach provides a conservative estimate of the first predicted fill level, ensuring that the first predicted fill level is not underestimated, which can be particularly useful in scenarios where avoiding unexpected emptying of the container is desirable.

In a fourth scenario, act 330 may comprise identifying the two potential target interface distances between which the target interface distance lies and extrapolate first expected fill level from those of the identified potential target interface distances. Specifically, the act 330 may comprise identifying the two adjacent potential target interface distances in the first fill level information that bracket the actual target interface distance determined from the image data. Then, using these two reference points and their corresponding first expected fill levels, act 330 may comprise performing an interpolation to estimate the fill level for the actual target interface distance. This interpolation could be linear, assuming a straight-line relationship between the two known points, or it could employ more sophisticated methods such as polynomial or spline interpolation.

Of course, in any above-described example, if the target interface distance exactly matches a potential target interface distance (e.g., is exactly equal to or within a predetermined error margin, such as ±5%, of the potential target interface distance), then act 330 may simply comprise setting the first predicted fill level to the first expected fill level that corresponds to this matching potential target interface distance.

The first prediction process further comprises an act 340 of processing the first predicted fill level of the container to predict the interface-derived fill level of the container.

In a simple example, act 340 may simply comprise setting the first predicted fill level of the container as the interface-derived fill level of the container. More complex examples may make use of other predicted fill levels, as later exemplified.

FIG. 4 provides another example first prediction process 400, which may be used as the first prediction process 225 when performing act 220 of method 200 (FIG. 2). This example of the first prediction process may be performed when the image data comprises texture data and/or depth data.

The first prediction process here comprises processing 410 the identified representation of the target interface to identify a target interface shape. A target interface shape is a shape of the target interface.

The target interface shape may, for instance, be defined using geometrical or contour information that identifies or indicates the geometrical outline or contours of the representation of the target interface in the image data. This geometrical/contour information may, for instance, include coordinates of key points along the interface, mathematical equations describing curves or lines that form the interface, or a set of vectors defining the interface's contours.

The first prediction process also comprises 420 receiving second fill level information indicating, for each of a plurality of potential target interface shapes, a second expected fill level of the container.

The second fill information may comprise tabular information, e.g., mapping each of a plurality of different potential target interface shapes to a corresponding expected fill level. This tabular information could be structured as a lookup table or database, where each entry corresponds to a specific potential target interface shape and its associated expected fill level. The potential target interface shapes could be described using the structure as geometrical/contour information defining the target interface shape.

As another example, the second fill information may comprise a data representation of the interior of the container, e.g., in the form of a digital model or similar. The data representation includes a representation of a bottom of the interior of the container.

The digital model could be created using various techniques such as 4D scanning of the actual container or computer-aided design (CAD) based on the container's specifications.

The first prediction process also comprises 430 processing the second fill level information and the target interface shape to predict a second predicted fill level of the container.

Consider a scenario in which the second fill information comprises tabular information mapping each of a plurality of different potential target interface shapes to a corresponding expected fill level. In this scenario, act 430 may comprise comparing the target interface shape identified from the image data to the potential target interface shapes in the tabular information. Act 430 may then identify the potential target interface shape that most closely matches the observed target interface shape. Once the closest matching potential target interface shape is identified, the corresponding second expected fill level associated with that shape can be used as the second predicted fill level of the container.

The skilled person will appreciate that the process to identify a closest matching shape will be dependent upon how the shapes are defined. For example, if the shapes are defined using a set of key points, the comparison may involve calculating the distance between corresponding points or analyzing the overall distribution of points. If the shapes are defined using mathematical equations, the comparison may comprise evaluating the similarity of these equations or their parameters (e.g., using a cost function or similar).

In cases where an exact match is not found, act 430 may employ interpolation techniques to estimate the second predicted fill level. This may comprise considering multiple similar potential target interface shapes and their associated expected fill levels to derive a more accurate prediction, e.g., averaging the expected fill levels of the X most similar potential target interface shapes, where X is a positive integer greater than 1 (e.g., 2, 4, 5 or more).

In another scenario, the second fill information comprises a data representation of the interior of the container.

In this scenario, act 430 may comprise the target interface shape to various cross-sections or layers within the digital model. By identifying where in the model the observed target interface shape best fits, the system is able to determine the current fill level. In particular, the current fill level can be calculated by determining a distance or volume between the identified position of the target interface and the represented bottom of the container.

Put another way, the act 430 of processing the second fill level information and the target interface shape may comprise identifying a part of the data representation of the interior of the container matching the shape of the target interface shape; and determining the second predicted fill level by determining a difference between the identified part of the data representation and the representation of the bottom of the interior of the container.

This approach allows for highly accurate fill level predictions, especially for containers with complex geometries. It also provides the flexibility to easily update the model if the container's characteristics change or to apply the same processing method to different container types by simply using their respective digital models.

The first prediction process further comprises an act 440 of processing the first predicted fill level of the container to predict the interface-derived fill level of the container.

In a simple example, act 440 may simply comprise setting the second predicted fill level of the container as the interface-derived fill level of the container. More complex examples may make use of other predicted fill levels, as later exemplified.

FIG. 5 provides another example first prediction process 500, which may be used as the first prediction process 225 when performing act 220 of method 200 (FIG. 2).

The first prediction process here comprises processing 510 the identified representation of the target interface to identify a target interface size.

A target interface size is a size of the target interface. For instance, the target interface size may be any measure of the identified representation of the target interface that represents or changes with a change in size of the target interface, such as a diameter of the (representation of the) target interface, a circumference of the (representation of the) target interface and/or an area enclosed by the (representation of the) target interface. Other suitable examples will be readily apparent to the skilled person.

This approach recognizes that the size of the representation of the target interface is expected to change with changes in the fill level of the container. In particular, due to the inherent perspective effect in image capture, for a container with straight, vertical sides, interfaces that are more distant from the sensing arrangement will be associated with a smaller sized representation.

The first prediction process here also comprises receiving 520 third fill level information indicating, for each of a plurality of potential target interface sizes, a third expected fill level of the container. In this way, the third fill level information is effectively able to correlate or map a target interface size to an expected fill level of the container.

The third fill level information may be structured or formed in an analogous manner to the previously disclosed first fill level information.

Thus, the third fill level information may comprise a function or model configured to map a target interface size to the third expected fill level.

Alternatively, the third fill level information may comprise tabular data identifying, for each of the plurality of potential target interface sizes, the third expected fill level of the container. The first tabular data may therefore comprise a plurality of data entries, each comprising a respective potential target interface size and its corresponding third expected fill level.

The first prediction process here also comprises processing 530 the third fill level information and the target interface size to identify the potential target interface shape size closest to the target interface size. This can be performed in a similar manner to the approach described for processing the first fill level information and the target interface distance, and approaches are not repeated for the sake of conciseness.

The first prediction process here also comprises predicting 540 the fill level of the container using the third expected fill level of the identified potential target interface size.

In a simple example, act 540 may simply comprise setting the third predicted fill level of the container as the interface-derived fill level of the container. More complex examples may make use of other predicted fill levels, as later exemplified.

The skilled person will appreciate that the above-described first prediction processes 225 (FIGS. 3, 4 and 5) may be combined or performed in tandem to improve the accuracy and reliability of the fill level prediction. Specifically, the disclosure outlines techniques that can produce a first, second, and/or third predicted fill level, each derived from different aspects of the image data analysis. When multiple predicted fill levels are generated, these may be advantageously combined to produce a more robust interface-derived fill level.

For instance, the first prediction process may comprise averaging the different predicted fill levels, potentially applying weights based on the perceived reliability or accuracy of each prediction method. Alternatively, more sophisticated combination techniques could be employed, such as using the median value to mitigate the impact of any outlier predictions.

This combinatorial approach recognizes that each prediction method may have its own strengths and limitations. For example, the prediction method based on target interface distance might be particularly accurate for containers with simple geometries, while the method using target interface shape could be more effective for containers with complex internal structures.

Consequently, the acts of processing the predicted fill levels (acts 340, 440, and/or 540) may effectively be consolidated into a single act that synthesizes the various predictions to determine the interface-derived fill level of the container. This consolidated act may comprise, for instance, combining the predicted fill levels (e.g., averaging the predicted fill levels) to produce the interface-derived fill level.

In other examples, the fill level(s) produced by each instance of the first prediction process 300, 400, 500 may individually represent a respective interface-derived fill level that may be used to generate the predicted fill level.

Further proposed embodiments recognize that the reflection of light emitted by a light source will also change in size, shape and distance responsive to a fill level of the container. In particular, as the fill level of the container changes, so the distance travelled by the light source will also change in size, shape and distance.

In particular, a light source will inevitably have a region of highest intensity light output (e.g., representing the location of a filament or LED chip(s) of the light source). The characteristics of the reflection of this region will change responsive to a fill level of the container.

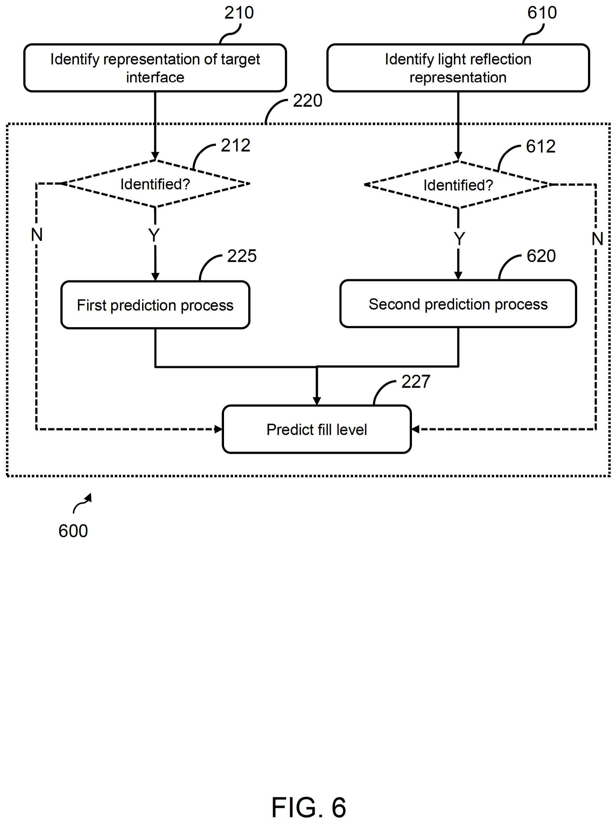

FIG. 6 illustrates another proposed method 600 that may be performed by the processing arrangement 152 (FIG. 1) that exploits this recognition. For this method, the monitoring system 100 further comprises a light source configured to emit light into the interior of the container.

The method 600 again comprises the act 210 of process the image data to identify, if present, the representation of a target interface in the image data and the act 220 of, if a representation of the target interface is present, predicting 220 a fill level of the container.

As before, the predicting 220 comprises, if a representation of the target interface is identified, performing the first prediction process 225 and processing 227 the reflection-derived fill level of the container to predict the fill level of the container.

The method 600 further comprises processing 610 the image data to identify, if present, a light reflection representation in the image data. The light reflection representation is a representation in the image data of a reflection of the light emitted by the light source, e.g., a reflection of the highest intensity light emitted by the light source.

The skilled person would readily appreciate a number of techniques that may be employed to perform act 610.

For instance, act 610 may comprise using one or more image segmentation techniques to isolate the light reflection representation from other elements in the image data.

As a working example, where the image data comprises texture data defining intensity values for different parts of the interior of the container, a suitable image segmentation technique may comprise one or more thresholding operations. In such approaches, intensity values above a certain threshold are identified as representative of the light reflection. This recognizes that the representation of a reflection of emitted light is likely to have relatively high intensity values. The certain threshold may, for instance, be defined as a predetermined percentage of the highest intensity value in the image data.

In more detail, texture data may comprise intensity values that correspond to the brightness or luminosity of different areas captured in the image. A thresholding operation, use for performing step 620, may comprise setting a cut-off value (the threshold) and classifying all pixels or regions with intensity values above this threshold as belonging to the light reflection.

For improved accuracy, the threshold value may be dynamically defined based on the intensity value(s) in the image data. For instance, if the predetermined percentage is set at 90%, and the highest intensity value in the image is 240, then the threshold would be set at 216 (90% of 240). This adaptive approach allows the segmentation to account for variations in overall image brightness, such as those resulting from different reflective properties of different agricultural materials.

In practice, the thresholding operation(s) may be applied in combination with other image processing techniques to refine the identified light reflection representation. For example, after the initial thresholding, one or more morphological operations such as dilation or erosion might be applied to smooth the boundaries of the identified light reflection representation.

Other suitable image segmentation techniques may also or otherwise be employed. For instance, a machine-learning algorithm may be employed to identify (if present) any light reflection representation in the image data. As another example, a color analysis method may be performed if the image data includes color information, as a light reflection representation may be discriminated from other parts of image data by their color characteristics (e.g., as such a light reflection representation may be whiter or more saturated than surrounding areas).

The method 600 also adapts act 220 to further comprise, if a light reflection representation is present, performing a second prediction process 620 comprising processing the light reflection representation to predict a reflection-derived fill level of the container. Example second prediction processes are provided later in this disclosure.

Act 227 of act 220 is also configured to further comprise, if a light reflection representation of the target interface is present, processing the reflection-derived fill level of the container to predict the fill level of the container.

Thus, if both a light reflection representation and a representation of the target interface are present in the image data, processing the interface-derived fill level and the reflection-derived fill level of the container to predict the fill level of the container. In particular, act 227 may comprise combining the interface-derived fill level and the reflection-derived to predict the overall fill level of the container.

As a first example, act 227 may comprise averaging the interface-derived and reflection-derived fill levels to produce the predicted fill level. As a second example, act 227 may comprise setting the lowest of the interface-derived and reflection-derived fill levels as the predicted fill level, to reduce a risk that act 227 overestimates the container's fill level. Other suitable approaches will be apparent to the skilled person.

In an alternative approach, act 227 may comprise, if either of first prediction process or second first prediction process produces more than one predicted fill level, combining all fill levels produced by the first prediction process 225 and second prediction process 620 to predict the fill level of the container. In this way, each predicted fill level of the first prediction process may represent a respective interface-derived fill level and each predicted fill level of the second prediction process may function as a respective reflection-derived fill level.

As a first example, act 227 may comprise averaging all predicted fill levels produced by the first and second prediction processes. As a second example, act 227 may comprise setting the predicted fill level to be the lowest of all predicted fill levels produced by the first and second prediction processes. Other suitable approaches will be apparent to the skilled person.

Act 227 may be readily adapted to handle different scenarios based on the presence or absence of the target interface representation and light reflection representation in the image data.

For instance, if no representation of the target interface is identified in act 210 (and determined in an act 212), but a light reflection representation is identified in act 610, act 227 may use only the reflection-derived fill level to define the fill level of the container, e.g., set the reflection-derived fill level as the fill level of the container.

Similarly, if no light reflection representation is identified in act 610 (as determined in an act 612), but a representation of the target interface is identified in act 210, act 227 may use only the interface-derived fill level to predict the overall fill level of the container, e.g., set the interface-derived fill level as the fill level of the container.

In the scenario where neither a light reflection representation nor a representation of the target interface is identified, act 227 may indicate that the fill level is either 0 (i.e., the container is empty) or indeterminable.

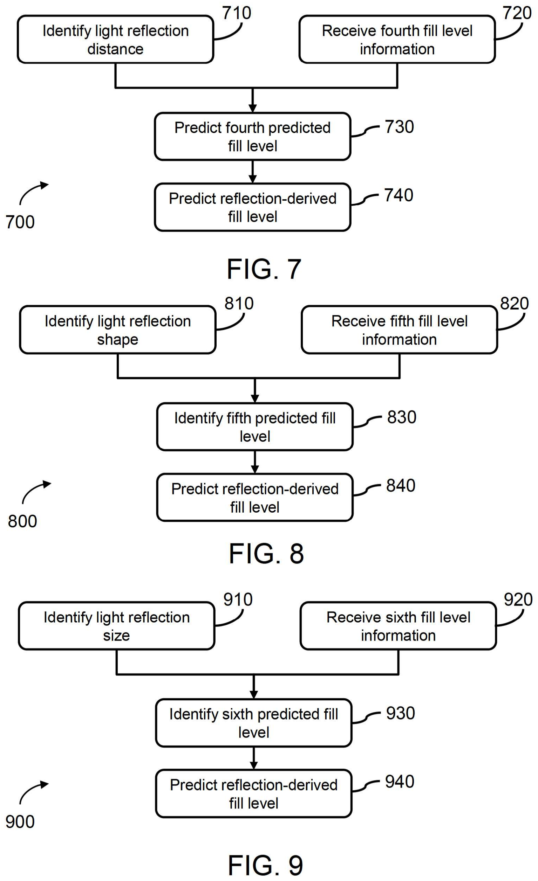

FIG. 7 illustrates one example second prediction process 700, which may be used as the second prediction process 620 when performing act 220 of method 600 (FIG. 6). This example of the first prediction process makes use of depth information carried by the image data. Thus, for the purposes of this example, the sensing arrangement comprises a depth sensor and the image data comprises depth data of the interior of the container.

This example of the second prediction process 700 is analogous to the example of the first prediction process 300 comprising acts 310, 320, 330, 340 (FIG. 3), and may employ similar techniques.

The second prediction process 700 comprises processing 710 the identified light reflection representation to identify a light reflection distance. A light reflection distance is a distance between the sensing arrangement and the reflection of light emitted by the light source. Act 710 may be performed in a similar manner to act 310 (FIG. 3), and the procedure is not repeated for the sake of conciseness.

The second prediction process 700 also comprises receiving 720 fourth fill level information indicating, for each of a plurality of potential light reflection distances, a fourth expected fill level of the container. The fourth fill level information may be structured similarly to the first fill level information, e.g., comprising a function/model or tabular information.

The second prediction process 700 also comprises processing 730 the fourth fill level information and the light reflection distance to predict a fourth predicted fill level of the container. Act 730 can be performed in a similar manner to act 330 of the first prediction process 300, effectively replacing the term "first fill" with "fourth fill" and "target interface" with "light reflection" throughout, and is not described in detail for the sake of conciseness.

The second prediction process 700 also comprises an act 740 of processing the fourth predicted fill level of the container to predict the reflection-derived fill level of the container. In a simple example, act 740 may simply comprise setting the fourth predicted fill level of the container as the reflection-derived fill level of the container. More complex examples may make use of other predicted fill levels, as later exemplified.

FIG. 8 illustrates another example second prediction process 800, which may be used as the second prediction process 620 when performing act 220 of method 600 (FIG. 6). This example of the second prediction process 800 is analogous to the example of the first prediction process 400 comprising acts 410, 420, 430, 440 (FIG. 4), and may employ similar techniques.

In particular, the second prediction process here comprises processing 810 the identified light reflection representation to identify a light reflection shape. A light reflection shape is a shape of the light reflection. The light reflection shape may be defined in a similar manner to the target interface shape, previously described, and act 810 may be performed in an analogous manner to act 410 previously described), and the procedure is not repeated for the sake of conciseness.

The second prediction process 800 also here comprises receiving 820 fifth fill level information indicating, for each of a plurality of potential light reflection shapes, a fifth expected fill level of the container. The fifth fill level information may be structured similarly to the second fill level information, e.g., comprising tabular information.

The second prediction process 800 also here comprises processing 830 the fifth fill level information and the light reflection shape to predict a fifth predicted fill level of the container. Act 830 can be performed in a similar manner to act 430 of the first prediction process 400, effectively replacing the term "first fill" with "fifth fill" and "target interface" with "light reflection" throughout, and is not described in detail for the sake of conciseness.

The second prediction process 800 also comprises an act 840 of processing the fifth predicted fill level of the container to predict the reflection-derived fill level of the container. In a simple example, act 840 may simply comprise setting the fifth predicted fill level of the container as the reflection-derived fill level of the container. More complex examples may make use of other predicted fill levels, as later exemplified.

FIG. 9 illustrates another example second prediction process 900, which may be used as the second prediction process 620 when performing act 220 of method 600 (FIG. 6). This example of the second prediction process 900 is analogous to the example of the first prediction process 500 comprising acts 510, 520, 530, 540 (FIG. 5), and may employ similar techniques.

In particular, the second prediction process here comprises processing 910 the identified light reflection representation to identify a light reflection size. A light reflection size is a size of the light reflection. The light reflection size may be defined in a similar manner to the target interface shape, previously described. For instance, the light reflection size may be any measure of the identified light reflection representation that represents or changes with a change in size of the light reflection, such as a diameter of the light reflection (representation), a circumference of the light reflection (representation) and/or an area enclosed by the light reflection (representation). Other suitable examples will be readily apparent to the skilled person.

Act 910 may be performed in an analogous manner to act 510 previously described), and the procedure is not repeated for the sake of conciseness.

The second prediction process 900 also here comprises receiving 920 sixth fill level information indicating, for each of a plurality of potential light reflection sizes, a sixth expected fill level of the container. The sixth fill level information may be structured similarly to the first fill level information or the third fill level information, e.g., comprising tabular information.

The second prediction process 900 also here comprises processing 930 the sixth fill level information and the light reflection size to predict a sixth predicted fill level of the container. Act 930 can be performed in a similar manner to act 530 of the first prediction process 500, effectively replacing the term "first fill" with "sixth fill" and "target interface" with "light reflection" throughout, and is not described in detail for the sake of conciseness.

The second prediction process 900 also comprises an act 940 of processing the sixth predicted fill level of the container to predict the reflection-derived fill level of the container. In a simple example, act 940 may simply comprise setting the sixth predicted fill level of the container as the reflection-derived fill level of the container. More complex examples may make use of other predicted fill levels, as later exemplified.

The skilled person will appreciate that the above-described second prediction processes 620 (FIGS. 3, 4 and 5) may be combined or performed in tandem to improve the accuracy and reliability of the fill level prediction. Specifically, the disclosure outlines techniques that can produce a fourth, fifth and/or sixth predicted fill level, each derived from different aspects of the image data analysis. When multiple predicted fill levels are generated, these may be advantageously combined to produce a more robust reflection-derived fill level.

For instance, the second prediction process may comprise averaging the different predicted fill levels, potentially applying weights based on the perceived reliability or accuracy of each prediction method. Alternatively, more sophisticated combination techniques could be employed, such as using the median value to mitigate the impact of any outlier predictions.

Consequently, the acts of processing the predicted fill levels (acts 740, 840, and/or 940) may effectively be consolidated into a single act that synthesizes the various predictions to determine the reflection-derived fill level of the container. This consolidated act may comprise, for instance, combining the predicted fill levels (e.g., averaging the predicted fill levels) to produce the reflection-derived fill level.

In other examples, the fill level(s) produced by each instance of the second prediction process 700, 800, 900 may individually represent a respective reflection-derived fill level that may be used to generate the predicted fill level.

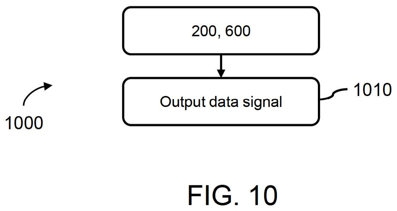

FIG. 10 illustrates another proposed method 1000 that may be performed by the processing arrangement 152 (FIG. 1). The method 1000 comprises performing a previously described method 200, 600 to predict a fill level of the container.

The method 1000 further comprises outputting 1010 a data signal responsive to the predicted fill level of the container. For instance, act 1010 may comprise providing a data signal carrying the predicted fill level of the container over an output interface of the processing arrangement or a data signal responsive to the predicted fill level of the container.

In some examples, act 1010 may comprise controlling a user interface (not illustrated) to provide a visual or audible indication of the predicted fill level. This could involve displaying the predicted fill level as a numerical value or percentage on a screen, updating a graphical representation of the container to reflect the current fill level, or triggering an alarm or alert sound when the fill level reaches a predetermined threshold. The user interface may be part of a dashboard system in an agricultural vehicle carrying the container, a standalone display near the container, or a mobile device application accessible to operators.

In some examples, act 1010 may comprise storing the predicted fill level in a memory or database associated with the processing arrangement. This stored data is useful for a wide variety of purposes, such as tracking fill level changes over time, generating historical reports, or performing trend analysis. The memory or database may be local to the monitoring system or in a remote location, such as a cloud-based storage system. In some variations, the stored fill level(s) may be associated with a timestamp, allowing for precise tracking of when each measurement was taken.

Act 1010 may comprise providing the predicted fill level to a further processing arrangement for further processing. For instance, act 1010 may provide the predicted fill level to a planning system for planning the emptying or refilling of the container. By way of example, the planning system may use the predicted fill level to schedule a refill of the container (e.g., when it is running low on agricultural material) or the emptying of a container that is nearing capacity. Such approaches are particularly useful in large-scale agricultural operations where multiple containers need to be managed simultaneously.

The skilled person will therefore appreciate that there is proposed a system comprising the herein proposed monitoring system and a planning system configured to receive a data signal carrying the predicted fill level (from the processing arrangement) and schedule a refilling and/or emptying of the container responsive thereto.

The planning system may, for instance, be configured to the predicted fill level to plan routes for vehicles responsible for refilling or emptying containers, minimizing travel time and fuel consumption. Additionally, by providing a real-time fill level to the planning system, it becomes possible to implement just-in-time inventory management practices for agricultural materials, reducing waste and improving overall operational efficiency.

In some examples, act 1010 may comprise processing the predicted fill level to determine whether or not to generate an alert, and controlling the data signal responsive to the determination (e.g., to control a user output interface). For instance, the processing arrangement may compare the predicted fill level to one or more predetermined threshold values. These threshold values could represent critical fill levels, such as when the container is nearly full or almost empty. If the predicted fill level exceeds or falls below these thresholds, the processing arrangement may generate an alert signal as part of the data signal.

The alert could take various forms depending on the specific implementation and user preference(s). For example, it might be a visual alert displayed on a screen, such as a flashing icon or a color-coded indicator. Alternatively or additionally, it could be an audible alert, such as a beep or spoken warning, emitted through a speaker system. In some examples, the alert might also be haptic feedback, such as a vibration in a handheld device or the controls of an agricultural vehicle.

The user output interface controlled by the data signal could be integrated into the dashboard of an agricultural vehicle, a standalone display near the container, or even a mobile device application.

The skilled person will therefore appreciate that there is proposed a system comprising the herein proposed monitoring system and a user output interface configured to generate a visual, audible, or haptic alert responsive to the data signal from the processing arrangement. This system may provide real-time feedback to operators about the container's fill level, enabling timely decision-making and efficient management of agricultural materials.

Some proposed embodiments make use of a machine-learning method, e.g., to perform image segmentation to identify the representation of the target interface and/or light reflection representation in the image data.

Any suitable machine-learning algorithm may be used in such embodiments. Suitable machine-learning algorithms include (artificial) neural networks, support vector machines (SVMs), Naïve Bayesian models and decision tree algorithms, although other appropriate examples will be apparent to the skilled person.

There are a number of well-established approaches for training a machine-learning algorithm. Typically, such training approaches make use of a large database of known input and output data. The machine-learning algorithm is modified until an error between predicted output data, obtained by processing the input data with the machine-learning algorithm, and the actual (known) output data is close to zero, i.e., until the predicted output data and the known output data converge. The value of this error is often defined by a cost function. The precise mechanism for modifying the machine-learning algorithm depends upon the type of model. Example approaches for use with a neural network include gradient descent, backpropagation algorithms and so on.

For training a machine-learning method used for identifying the representation of the target interface, the known input data comprises example instances of image data and the corresponding known output data comprises, for each instance of image data, information identifying the representation of the target interface. The information identifying the representation of the target interface may be defined by an appropriately skilled or trained individual.

Similarly, for training a machine-learning method used for identifying the representation of the target interface, the known input data comprises example instances of image data and the corresponding known output data comprises, for each instance of image data, information identifying a light reflection representation is said instance of image data (where present). The information identifying the light reflection representation may be defined by an appropriately skilled or trained individual.

The above-described approach for training a machine-learning method is a supervised training technique. Other forms of training mechanisms are known to the skilled person, such as unsupervised learning and reinforcement learning. Unsupervised learning algorithms are able to identify patterns and structures in the image data without labeled training examples. Reinforcement learning approaches could be particularly valuable in scenarios where the system needs to adapt its predictions based on feedback about their accuracy over time, allowing for continuous improvement in the fill level estimation process.

It will be understood that disclosed methods are preferably computer-implemented methods and are also considered, by themselves, to be embodiments of the proposed approach. There is also proposed a computer program comprising code means for implementing any described method when said program is run on a guidance control system, such as a computer. Thus, different portions, lines or blocks of code of a computer program according to an embodiment may be executed by a guidance control system or computer to perform any herein described method.

A computer program may be stored on a computer-readable medium, itself an embodiment of the disclosure. A "computer-readable medium" is any suitable mechanism or format that can store a program for later processing by a guidance control system. The computer readable medium can be, for example but not limited to, an electronic, magnetic, optical, electromagnetic, infrared, or semiconductor system, apparatus or device. The computer-readable medium is preferably non-transitory.

In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing embodiments of the disclosure, from a study of the drawings, the disclosure and the appended claims. In the claims, the word "comprising" does not exclude other elements or acts, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa. Any reference signs in the claims should not be construed as limiting the scope.

All references cited herein are incorporated herein in their entireties. If there is a conflict between definitions herein and in an incorporated reference, the definition herein shall control.

## Claims

1. A monitoring system for predicting a fill level of a container for agricultural material, the monitoring system comprising:
a sensing arrangement configured to generate image data of an interior of the container;
a processing arrangement configured to:
process the image data to identify, if present, the representation of a target interface in the image data, wherein the target interface is an interface between gas, the container and any agricultural material contained in the container; and
predict a fill level of the container, wherein the processing arrangement is configured to predict the fill level by, if a representation of the target interface is present:
performing a first prediction process comprising processing the identified representation of the target interface to predict an interface-derived fill level of the container; and
processing the interface-derived fill level of the container to predict the fill level of the container.

2. The monitoring system of claim 1, wherein the sensing arrangement comprises a depth sensor and the image data comprises depth data of the interior of the container.

3. The monitoring system of claim 2, wherein the sensing arrangements comprises a LiDAR sensor and the image data comprises LiDAR data of the interior of the container.

4. The monitoring system of any one of claims 2 or 3, wherein the first prediction process comprises:
processing the identified representation of the target interface to identify a target interface distance, wherein a target interface distance is a distance between the sensing arrangement and the target interface;
receiving first fill level information indicating, for each of a plurality of potential target interface distances, a first expected fill level of the container; and
processing the first fill level information and the target interface distance to predict a first predicted fill level of the container; and
processing the first predicted fill level of the container to predict the interface-derived fill level of the container.

5. The monitoring system of claim 4, wherein the first fill information comprises tabular data identifying, for each of the plurality of potential target interface distances, the first expected fill level of the container.

6. The monitoring system of any one of claims 1 to 5, wherein the first prediction process comprises:
processing the identified representation of the target interface to identify a target interface shape, wherein a target interface shape is a shape of the target interface;
receiving second fill level information indicating, for each of a plurality of potential target interface shapes, a second expected fill level of the container;
processing the second fill level information and the target interface shape to predict a second predicted fill level of the container; and
processing the second predicted fill level of the container to predict the interface-derived fill level of the container.

7. The monitoring system of claim 6, wherein:
the second fill level information comprises a data representation of the interior of the container, wherein the data representation includes a representation of a bottom of the interior of the container;
processing the second fill level information and the target interface shape comprises:
identifying a part of the data representation of the interior of the container matching the shape of the target interface shape; and
determining the second predicted fill level by determining a difference between the identified part of the data representation and the representation of the bottom of the interior of the container.

8. The monitoring system of any one of claims 1 to 7, wherein the first prediction process comprises:
processing the identified representation of the target interface to identify a target interface size, wherein a target interface size is a size of the target interface;
receiving third fill level information indicating, for each of a plurality of potential target interface sizes, a third expected fill level of the container;
processing the third fill level information and the target interface size to predict a third predicted fill level of the container; and
processing the third predicted fill level of the container to predict the interface-derived fill level of the container.

9. The monitoring system of claim 8, wherein the target interface size is a diameter of the target interface.

10. The monitoring system of any one of claims 1 to 9, wherein the processing arrangement is configured to process the image data using an edge detection technique to identify, if present, the representation of the target interface.

11. The monitoring system of any one of claims 1 to 10, further comprising a light source configured to emit light into the interior of the container, wherein:
the processing arrangement is configured to process the image data to identify, if present, a light reflection representation in the image data, wherein the light reflection representation is a representation in the image data of a reflection of the light emitted by the light source; and
the predicting a fill level of the container predicting comprises, if a light reflection representation of the target interface is present:
performing a second prediction process comprising processing the light reflection representation to predict a reflection-derived fill level of the container; and
processing the reflection-derived fill level of the container to predict the fill level of the container.

12. The monitoring system of claim 11, wherein the second prediction process comprises:
processing the identified light reflection representation to identify a light reflection distance, wherein a light reflection distance is a distance between the sensing arrangement and the reflection of light emitted by the light source;
receiving fourth fill level information indicating, for each of a plurality of potential light reflection distances, a fourth expected fill level of the container;
processing the fourth fill level information and the light reflection distance to predict a fourth predicted fill level of the container; and
processing the fourth predicted fill level of the container to predict the reflection-derived fill level of the container.

13. The monitoring system of claim 11 or 12, wherein the second prediction process comprises:
processing the light reflection representation to identify a light reflection shape, wherein a light reflection shape is a shape of the reflection of the light emitted by the light source;
receiving fifth fill level information indicating, for each of a plurality of potential light reflection shapes, a fifth expected fill level of the container;
processing the fifth fill level information and the light reflection shape to predict a fifth predicted fill level of the container; and
processing the fifth predicted fill level of the container to predict the reflection-derived fill level of the container.

14. A storage system comprising:
the container for agricultural material; and
the monitoring system of any one of claims 1 to 13.

15. A computer-implemented method for predicting a fill level of a container for agricultural material, the computer-implemented method comprising:
generating, using an imaging sensing arrangement, image data of an interior of the container;
processing, using a processing arrangement, the image data to identify, if present, the representation of a target interface in the image data, wherein the target interface is an interface between gas, the container and any agricultural material contained in the container; and
predicting, using the processing arrangement a fill level of the container, the predicting comprising, if a representation of the target interface is present:
performing a first prediction process comprising processing the identified representation of the target interface to predict an interface-derived fill level of the container; and
processing the interface-derived fill level of the container to predict the fill level of the container.
